# EUROPEAN PATENT APPLICATION

(11) **EP 1 862 542 A1**
(43) Date of publication of application: **05.12.2007**
(21) Application number: 06729411.6
(22) Date of filing: 17.03.2006
(51) Int. Cl.: C12N 15/09, C12M 1/00, C12M 1/34, C12Q 1/68, G01N 21/64, G01N 33/53

(54) **DETECTING CHIP AND METHOD OF DETECTING SUBSTANCE USING THE SAME**

(30) Priority: 18.03.2005 JP 2005079010
(71) Applicant: Toppan Printing Co., Ltd., Taito-ku, Tokyo 110-0016 (JP); Shimadzu Corporation, Kyoto-shi, Kyoto 604-8511 (JP)
(72) Inventor: OZAWA, Tomoyuki, c/o Toppan Printing Co.,Ltd., Tokyo, 1100016 (JP); KUROKI, Hiroyuki, c/o Toppan Printing Co.,Ltd., Tokyo, 1100016 (JP); HANAFUSA, Nobuhiro, c/o Shimadzu Corporation, Kyoto-shi, Kyoto 604-8511 (JP); OGATA, Koretsugu, c/o Shimadzu Corporation, Kyoto-shi, Kyoto 604-8511 (JP)
(74) Representative: TBK-Patent
(86) International application number: PCT/JP2006/305422
(87) International publication number: WO 2006/098435

(57) **Abstract**

A detection chip comprises a substrate and a well-shaped reaction portion formed in the substrate, in which the well-shaped reaction portion comprises a bottom portion having a planar shape and a side portion the width between which is widen from the bottom portion toward an opening portion.

## Description

### TECHNICAL FIELD

The present invention relates to a detection chip used for example for the detection of antigens by antigen-antibody reaction and the detection of DNA, and a method of detecting a substance using the same.

Priority is claimed on Japanese Patent Application No. 2005-079010, filed March 18, 2005, the content of which is incorporated herein by reference.

### BACKGROUND ART

In recent years, µ-Total Analysis System technology and Lab-on-Chip technology of performing chemical reactions and DNA reactions, protein reactions and the like on a chip have been researched and implemented. As a result, reaction experiments that until now required large-scale laboratory equipment and large quantities of a reagent solution can now be performed on a chip of a few millimeters square or less with a small amount of a reagent.

On such a chip, normally small holes or depressions called "wells" are formed to be used as reaction fields. The wells are made by performing etching on a semiconductor material or glass, or made by laminating a plate with holes.

For example, there is disclosed a microreactor chip that is provided with a chip substrate and a thin film material that is laminated on the chip substrate, wherein the thin film material has openings for containing a specimen in cooperation with the chip substrate in the laminated state of the thin film material on the chip substrate (refer to Patent Document 1).

Patent Document 1: Japanese Unexamined Patent Application, Publication No. 2002-027984

### DISCLOSURE OF INVENTION

### PROBLEMS TO BE SOLVED BY THE INVENTION

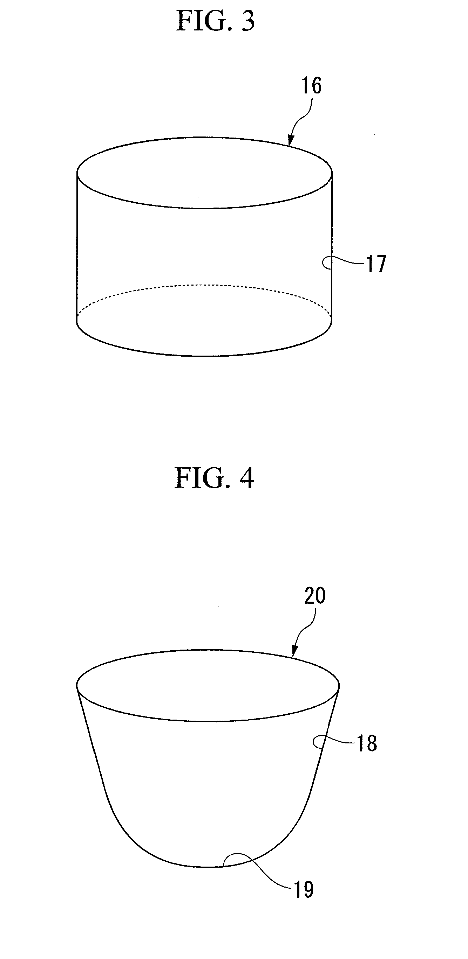

In many conventional microchips, wells are formed by laminating a plate with holes formed by performing etching on a semiconductor or glass. Therefore, the shape is that of a well 16 which is a vertical hole in which the side portion 17 is vertical as shown in FIG. 3, a bowl-shaped well 20 in which a side portion 18 is slanted and a bottom portion 19 is spherical as shown in FIG. 4, or a cone-shaped well. In the case of a vertical hole shape, air bubbles become mixed when charging the reagent. Also, complications arise such as the need to devise a charging method in order to prevent the inclusion of air bubbles. For example, when attempting to charge a reagent into a vertical hole with a diameter of 2 mm to 3 mm, a state of air bubbles being included results, without the reagent displacing the air bubbles. In this state, in the case of utilizing a reaction by heat, when heat for the reaction is applied, due to the expansion of air bubbles, problems arise such as the reagent overflowing.

Also, in the case of a cone-shaped or bowl-shaped well, since the side surface slopes in contrast to the case of a vertical hole shape, the reaction solution descends along the side surface and displaces the air that is in the well, thereby avoiding the inclusion of air bubbles. However, in these microchips, detection of the presence/absence of a reaction is often performed by detection of luminescence such as fluorescence, and so when detecting luminescence from the underside surface of the chip, light ends up being refracted by such a shape. This leads to difficulty in high-precision detection. Specifically, since the bottom portion is rounded, the light scatters. For this reason, there is the restriction that detection of fluorescence must be performed from above the well.

The present invention was conceived in view of the above circumstances, and has as its object to provide a detection chip having well-shaped reaction parts in which charging of a reaction solution is easy, and simple and high-sensitivity detection is possible, and a method of detecting a substance that uses this detection chip.

### MEANS FOR SOLVING THE PROBLEM

A detection chip according to the present invention comprises: a substrate; and a well-shaped reaction portion formed in the substrate and having a bottom portion forming a planar shape and a side portion the width between which is widen from the bottom portion toward an opening portion.

In this detection chip, the angle formed by the side portion and the bottom portion of the well-shaped reaction portion can be in a range of 100 degrees to 140 degrees.

In this detection chip, the diameter of the opening portion of the well-shaped reaction portion can be 5 mm or less, and the depth should be 5 mm or less.

In this detection chip, the contact angle of the inner surface of the well-shaped reaction portion with respect to pure water can be less than 60 degrees.

In the present invention, the substrate can be made of resin.

A method of detecting comprises: injecting a recognition substance into each well-shaped reaction portion of a detection chip that has a substrate and well-shaped reaction portions formed in the substrate, each well-shaped reaction portion having a bottom portion forming a planar shape and a side portion the width between which is widen from the bottom portion toward an opening portion; injecting a detection substance into each well-shaped reaction portion; and performing fluorescence detection for the presence/absence of a reaction between the recognition substance and the detection substance detected from the bottom portion side of each well-shaped reaction portion, either of the recognition substance or the detection substance being fluorescently labeled.

In this detection method, the detection substance can be nucleic acid.

### EFFECTS OF THE INVENTION

According to the detection chip of the present invention, since the side portion of the well-shaped reaction portion is tapered from the bottom portion toward the opening portion, when charging the reaction solution that is a reagent into the well-shaped reaction portion, it is possible to inject the reaction solution so as to descend from the side surface, which can facilitate displacement of air that exists in the well-shaped reaction portion and so avoid the incorporation of air bubbles in the reaction solution, and also since the bottom surface of the well-shaped reaction portion is formed in a planar shape, even when luminescence detection is performed from the underside surface, simple and high-sensitivity detection is possible without refraction of light.

Also, according to this detection chip, by setting the angle formed by the side portion and the bottom portion of the well-shaped reaction portion in a range of 100 degrees to 140 degrees, charging of the reaction solution is facilitated, and since the side surface slopes to the outer side in the diameter direction of the bottom surface from the bottom portion toward the opening portion, the light emitting surface area enlarges, enabling light emission analysis from the underside surface to be performed with high sensitivity.

Also, according to this detection chip, since the diameter of the opening portion of the well-shaped reaction portion is in a range of 5 mm or less and the depth is in a range of 5 mm or less, only a small amount of the sample and reagent are required for detection, which enables a cost reduction and economical use of the costly sample and reagent.

Also, according to this detection chip, since the contact angle of the inner surface of the well-shaped reaction portion with pure water is less than 60 degrees, a probe DNA or the like that is a reaction solution can be reliably held in the reaction portion.

According to the detection method of the present invention, since the substrate is made of resin, it not only has excellent heat resistance, chemical resistance, and molding workability, but it is possible to form a substrate by combining resins having different characteristics.

Also, according to the detection method, since the side portion of the well-shaped reaction portion is tapered from the bottom portion toward the opening portion, when charging the reaction solution that is a reagent into the well-shaped reaction portion, it is possible to inject the reaction solution so as to descend from the side surface, which can facilitate displacement of air that exists in the well-shaped reaction portion and avoid the incorporation of air bubbles in the reaction solution, and moreover when performing luminescence detection from the underside surface of the detection chip, since the bottom surface of the reaction portion forms a planar shape, high-sensitivity detection is possible without refraction of the light source such as an ultraviolet light. Also, labeling of the recognition substance enables visual observation of the presence/absence of a reaction.

Also, according to this detection method, since the detection substance is nucleic acid, detection thereof can be put to practical use in disease diagnosis and treatment.

### BRIEF DESCRIPTION OF THE DRAWINGS

FIG. 1 is a perspective drawing showing the shape of the well-shaped reaction portion according to one embodiment in the present invention.
FIG. 2 is a plan view showing a detection chip according to one embodiment in the present invention.
FIG. 3 is a side view showing the shape of a conventional well.
FIG. 4 is a side view showing another shape of a conventional well.

### DESCRIPTION OF THE REFERENCE SYMBOLS

1 : detection chip, 2 : substrate, 3 : well-shaped reaction portion, 6 : opening portion, 9: bottom portion, 10 : side portion

### BEST MODE FOR CARRYING OUT THE INVENTION

The present invention is described hereinbelow with reference to the drawings.

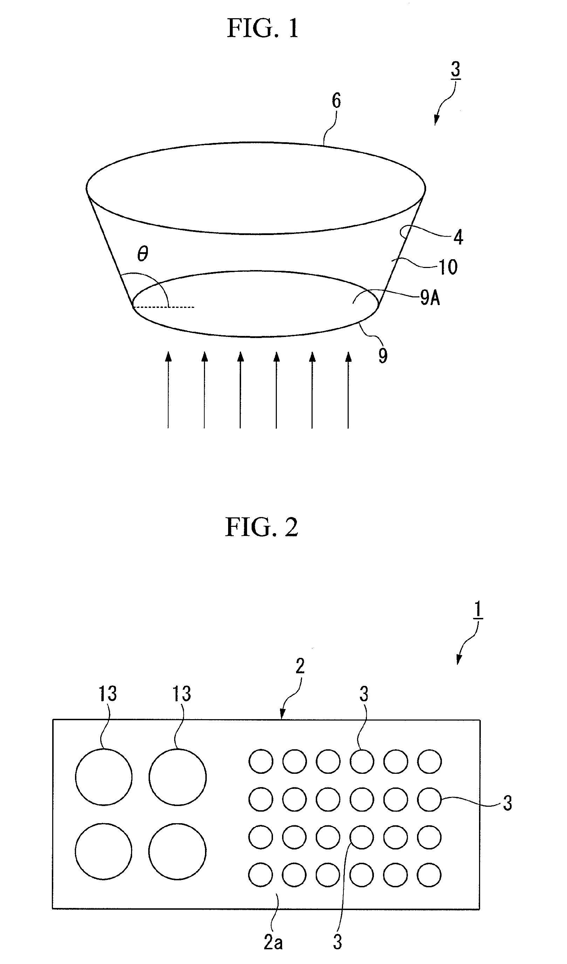

FIG. 2 is a drawing showing one embodiment of the present invention, showing a detection chip 1 that incorporates the present invention. In this detection chip 1, a plurality of well-shaped reaction portions 3 for reacting a sample and a reagent solution are formed on a substantially rectangular, plate-shaped substrate 2.

The substrate 2 is formed using plastic or the like and overall has a roughly rectangular form. The dimensions thereof enable the alignment of a predetermined number of the well-shaped reaction portions 3, and it is formed having a thickness so as not to easily bend during use. Here, as the plastic for forming the substrate 2 it is possible to use polycarbonate, polypropylene, cycloolefin polymer, fluorine polymer, silicone resin, and the like. Forming the substrate 2 with such a synthetic resin is advantageous for heat resistance, chemical resistance, and molding workability. Moreover, two or more types of resin may be used in conjunction. In this case, by producing a substrate 2 that takes advantage of the respective characteristics of the resins, it is possible to make various substrates 2 catering to the characteristics of the sample and the reagent and the like and to enable use in different applications as the situation demands. For example, it is possible to divide the materials between the upper half portion and the lower half portion of the substrate 2. Note that glass may be used as a material of the substrate 2.

A predetermined number of the well-shaped reaction portions 3 are formed from a flat top surface 2a of the substrate 2 along the thickness direction by, for example, resin molding or resin cutting. As shown in FIG. 1 and FIG. 2, each of the well-shaped reaction portions 3 has an axis line orthogonal to the top surface 2a of the substrate 2, and is formed so that the opening diameter gradually decreases from an opening portion 6 that opens to the top surface 2a toward the bottom. A bottom surface 9A of a bottom portion 9 of each well-shaped reaction portion 3 is formed in a planar shape, being horizontal and parallel with the top surface 2a of the substrate 2. A side surface 4 of a side portion 10 of each well-shaped reaction portion 3 is inclined at an angle θ in a range of 100 degrees to 140 degrees with respect to the bottom surface 9A (an angle on the inner portion side of the opening formed by the side surface 4 and the bottom surface 9A), and therefore formed so that the opening cross-sectional area enlarges from the bottom portion 9 toward the opening portion 6 (the top surface 2a of the substrate 2). The diameter of the opening portion 6 and depth of the inner space thereof may be 5 mm or less, and are preferably in a range of 0.01 mm to 5 mm.

Thereby, injecting of the reaction solution is facilitated, and entrapment of air bubbles in the reaction solution can be prevented. Also, the surface inside of the well-shaped reaction portion 3 is preferably smooth in order to facilitate charging of liquids.

Also, when forming the well-shaped reaction portions 3 in the substrate 2, in the case of the substrate 2 being constituted by a hard resin such as polycarbonate, it is preferable to use a resin cutting method. On the other hand, when the substrate 2 is formed by a soft material such as polypropylene, it is preferable to form the well-shaped reaction portions 3 with a resin molding method.

In order to facilitate charging of the reagent into the well-shaped reaction portions 3, hydrophilization treatment is performed on the substrate 2. Here, hydrophilization treatment is performed by an atmospheric-pressure plasma treatment, and the contact angle of the inner surface of each well-shaped reaction portion 3 with pure water is set to less than 60 degrees, and preferably less than 30 degrees. When in this range, the reaction solution that is charged in the well-shaped reaction portion 3 uniformly spreads on the bottom surface 9A without beading, thus facilitating detection. Also, when charging the reaction solution in the well-shaped reaction portion 3, the reaction solution descends along the side surface 4 to quickly spread over the bottom surface 9A without splashing or the like in the well-shaped reaction portion 3, and so is easy to charge. Moreover, air bubbles favorably escape, eliminating the mixing of air bubbles in the reaction solution.

The measurement of the contact angle is performed using a publicly known contact angle measurement, and charging of the reaction solution is performed using a dispensing burette, an injector, or syringe or the like. Also, the hydrophilization treatment is not limited to atmospheric-pressure plasma treatment, with corona treatment and coating treatment also acceptable.

In addition, on one side of the substrate 2 in the longitudinal direction, a plurality of storage hole portions 13 having a larger diameter than the well-shaped reaction portions 3 are formed. The storage hole portions 13 serve as storage portions for injecting a reagent, and are formed of a number according to the type of reagent to be used for detection.

Also, a flow channel that connects the well-shaped reaction portions 3 may be provided on the substrate 2. Also, by forming a flow channel that connects not only the well-shaped reaction portions 3 but the storage hole portions 13 and these well-shaped reaction portions 3, it becomes possible to inject the reaction solution into each of the well-shaped reaction portions 3 by sending the solution from the storage hole portions 13, and also becomes possible to perform continuous reaction in the flow channels. Thereby, a shortening of the inspection time can be achieved, and various analyses can be performed with small amounts of the sample and reagent, thereby realizing a reduction in costs.

Also, when using multiple types of resins, it is possible to divide the resins to be used between at least two sites on the substrate 2, namely, a site including the well-shaped reaction portions 3 and a site including the storage hole portions 13 and the flow channels.

It is preferable to choose a material of high transparency for the substrate 2, particularly the portion of the bottom surface 9A of the bottom portion 9. However, even if the material is not transparent, since the side portion 10 is tapered from the bottom portion 9 toward the opening portion 6 according to the shape of the well-shaped reaction portion 3 described above, the light emitting surface area expands to enable highly sensitive detection.

The detection chip 1 of the present invention can be used for detection of antigen-antibody reactions and DNA reactions.

In the case of antigen detection by antigen-antibody reaction, for example, a sample containing an antigen is placed as a recognition substance in each well-shaped reaction portion 3 of the detection chip 1 in advance, and a reagent containing an antibody is subsequently added as a detection substance, and by adding a labeling substance to either of the recognition substance or the detection substance, the presence/absence of a reaction can be detected. A light-emitting substance such as fluorescence is generally used as a labeling substance.

In case of detecting DNA, for example, a nucleic acid probe is prepared as a recognition substance in the well-shaped reaction portions 3 of the detection chip 1 in advance, and DNA that is extracted from blood or the like subsequently serves as a the detection substance. By performing hybridization, it is possible to perform detection of DNA. In this event, if a labeling substance is added to either of the detection substance or the recognition substance, by detecting the presence/absence of the labeling substance, detection becomes possible. Also, by preparing a plurality of nucleic acids of differing sequences as a nucleic acid probe that is the recognition substance, it is possible to detect what kind of sequence is the DNA serving as the detection substance. Also, the detection chip 1 can be used for analysis of single nucleotide polymorphisms (SNP). Note that there may be a plurality of recognition substances, and in the case of the detection substance not being fluorescently labeled, one of the recognition substances may be labeled. In this way, it is possible to use the detection chip 1 for the case of a plurality of recognition substances and also the case of preparing a plurality of recognition substances and detecting SNP by multi-stage reaction.

For example, it is possible to perform analysis by combining the detection chip 1 with the invader method developed by Third Wave Technologies, Inc. (based in Madison, Wisconsin, U.S.A.). Thereby, it is possible to concretely implement SNP analysis.

Here, the recognition substance may be fixed in the well-shaped reaction portion 3, or may simply be held therein without being fixed.

Next, the case of actually using the aforedescribed detection chip 1 for testing shall be described.

### <Example 1>

One detection chip was fabricated by joining a substrate in which 24 of the well-shaped reaction portions 3 with a capacity of 10 µl are provided in a 2-mm thick polycarbonate plate and a substrate in which the storage hole portions 13 with a 6 mm diameter and 5 mm depth are formed in a 6-mm thick polycarbonate plate, with each well-shaped reaction portion 3 consisting of the side surface 4 extending from the 1-mm diameter bottom surface 9A to the 3-mm diameter opening portion 6 to slope at a mild angle of 130 degrees with respect to the bottom surface 9A so as to enlarge toward the outer side in the diameter direction of the bottom surface 9A by mechanical cutting. The detection chip was subjected to atmospheric-pressure plasma treatment for three minutes using nitrogen, and when the contact angle was measured using a FACE contact angle meter (manufactured by Kyowa Kaimen Kagaku Co.), a contact angle that was approximately 90 degrees before processing became 22 degrees after processing.

Hybridization is thus performed by manufacturing a biochip in which a reagent containing a fluorescence-labeled DNA specimen is injected into the storage hole portions 13 having a 6-mm diameter in the aforesaid polycarbonate detection chip and a different type of probe DNA is delivered by drops into each of the 24 well-shaped reaction portions 3 with a 3-mm diameter and dried.

Then, the reagent is delivered by drops into each of the 24 well-shaped reaction portions 3, and fluorescence detection is performed by reacting for a predetermined time at a predetermined temperature.

### <Comparison Example 1>

One detection chip was fabricated by joining a substrate in which the well-shaped reaction portions 3 with a capacity of 10 µl are provided in a 2-mm thick polycarbonate plate with the side surface 4 being vertical, and a substrate in which storage hole portions 13 with a 6 mm diameter and 5 mm depth are formed in a 6-mm thick polycarbonate substrate. This detection chip, similarly to above, was subjected to an atmospheric-pressure plasma treatment for three minutes using nitrogen, and when the contact angle was measured using a FACE contact angle meter (manufactured by Kyowa Kaimen Kagaku Co.), a contact angle that was approximately 90 degrees before processing became 23 degrees after processing.

Hybridization is thus performed by manufacturing a biochip in which a reagent containing a fluorescence-labeled DNA specimen is injected into the storage hole portions 13 having a 6-mm diameter in the aforesaid polycarbonate detection chip and a different type of probe DNA is delivered by drops into each of the 24 well-shaped reaction portions 3 and dried.

Then, the reagent is delivered by drops into each of the 24 well-shaped reaction portions 3, and fluorescence detection is performed by reacting for a predetermined time at a predetermined temperature.

### <Comparison Example 2>

One detection chip was fabricated by joining a 2-mm thick polycarbonate substrate provided with 24 well-shaped reaction portions 3 each having a semispherical bottom surface 9A, 3-mm diameter opening portion 6, and 10 µl capacity, and a 6-mm thick polycarbonate substrate provided with storage hole portions 13 with a 6 mm diameter and 5 mm depth. This detection chip was subjected to an atmospheric-pressure plasma treatment for three minutes using nitrogen, and when the contact angle was measured using a FACE contact angle meter (manufactured by Kyowa Kaimen Kagaku Co.), a contact angle that was approximately 90 degrees before processing became 22 degrees after processing.

Hybridization is thus performed by manufacturing a biochip in which a reagent containing a fluorescence-labeled DNA specimen is injected into the storage hole portions 13 having a 6-mm diameter in the aforesaid polycarbonate detection chip and a different type of probe DNA is delivered by drops into each of the 24 well-shaped reaction portions 3 having a 3-mm diameter and dried.

Then, the reagent is delivered by drops into each of the 24 well-shaped reaction portions 3, and fluorescence detection is performed by reacting for a predetermined time at a predetermined temperature.

The experiment results are as follows.

**Table 1**

| | Fluorescence Detection | Incorporation of Air Bubbles | Applying Reagent |
|---|---|---|---|
| Example 1 | Favorable | None | Easy |
| Comparative Example 1 | Reduced | Present | Difficult |
| Comparative Example 2 | Scattered at bottom surface | Present | Difficult |

Example 1 was thus superior in terms of operability when delivering the reagent by drops, removing air bubbles in the well-shaped reaction portions 3, and detection intensity of the fluorescence detection.

Note that this detection method can be used not only for fluorescence detection, but also for color comparison, chemiluminescence, precipitation, heat generation, and the like.

According the present embodiment described above, since the internal diameter of the side portion 10 of the well-shaped reaction portion 3 is widen from the bottom portion 9 toward the opening portion 6, when charging the reaction solution that is a reagent into the well-shaped reaction portion 3, it is possible to inject the reaction solution so as to descend along the side surface 4, which can facilitate displacement of air that exists in the well-shaped reaction portion 3 and so avoid the incorporation of air bubbles in the reaction solution, and at the same time since the bottom surface 9A of the well-shaped reaction portion 3 is formed in a planar shape, even when luminescence detection is performed from the underside surface, simple and high-sensitivity detection becomes possible without refraction of light.

By setting the angle formed by the side portion 10 and the bottom portion 9 of the well-shaped reaction portion 3 in a range of 100 degrees to 140 degrees, charging of the reaction solution is facilitated, and since the side surface 4 slopes to the outer side in the diameter direction of the bottom surface 9A, the light emitting surface area enlarges, enabling light emission analysis from the underside surface of the detection chip 1 to be performed with high sensitivity.

Since the diameter of the opening portion 6 of the well-shaped reaction portion 3 is in a range of 5 mm or less and the depth is in a range of 5 mm or less, it is possible to quickly and effectively perform analysis with only a small amount of the sample and reagent. Therefore, since only a small amount of the sample and reagent are required for detection, it is possible to achieve a cost savings and economical use of the costly sample and reagent.

Since the contact angle of the inner surface of the well-shaped reaction portion 3 with respect to pure water is 30 degrees or less, a probe DNA or the like that is a reaction solution can be reliably held in the well-shaped reaction portion 3.

Since the substrate 2 is made of resin, it not only has excellent heat resistance, chemical resistance, and molding workability, but it is possible to form the substrate 2 by combining resins having different characteristics, thereby enabling the facilitation of usage.

Since the width between the side portion 10 of the well-shaped reaction portion 3 is widen from the bottom portion 9 toward the opening portion 6, when charging the reaction solution that is a reagent into the well-shaped reaction portion 3, it is possible to inject the reaction solution so as to descend along the side surface 4, which can facilitate displacement of air that exists in the well-shaped reaction portion 3 and so avoid the incorporation of air bubbles in the reaction solution, and also when performing luminescence detection from the underside surface of the detection chip 1, since the bottom surface 9 of the well-shaped reaction portion 3 forms a planar shape, high-sensitivity detection is possible without the light source, such as an ultraviolet light, refracting. Also, by labeling the recognition substance, it is possible to visually observe the presence/absence of a reaction.

Since the detection substance is nucleic acid, detection thereof can be put to practical use in disease diagnosis and treatment.

## Claims

1. A detection chip, comprising:
a substrate; and
a well-shaped reaction portion formed in the substrate and having a bottom portion forming a planar shape and a side portion the width between which is widen from the bottom portion toward an opening portion.

2. The detection chip according to claim 1, wherein the angle formed by the side portion and the bottom portion of the well-shaped reaction portion is in a range of 100 degrees to 140 degrees.

3. The detection chip according to claim 1, wherein the diameter of the opening portion of the well-shaped reaction portion is 5 mm or less, and the depth of the opening portion of the well-shaped reaction portion is 5 mm or less.

4. The detection chip according to claim 1, wherein the contact angle of the inner surface of the well-shaped reaction portion with respect to pure water is less than 60 degrees.

5. The detection chip according to claim 1, wherein the substrate is made of resin.

6. A method of detecting a substance, comprising:
injecting a recognition substance into each well-shaped reaction portion of a detection chip that has a substrate and well-shaped reaction portions formed in the substrate, each well-shaped reaction portion having a bottom portion forming a planar shape and a side portion the width between which is widen from the bottom portion toward an opening portion;
injecting a detection substance into each well-shaped reaction portion; and
performing fluorescence detection for the presence/absence of a reaction between the recognition substance and the detection substance detected from the bottom portion side of each well-shaped reaction portion, either of the recognition substance or the detection substance being fluorescently labeled.

7. The method of detecting a substance according to claim 6, wherein the detection substance is nucleic acid.
